# EUROPEAN PATENT SPECIFICATION

(11) **EP 3 898 904 B1**
(45) Date of publication and mention of the grant of the patent: **04.02.2026**
(21) Application number: 19818189.3
(22) Date of filing: 18.12.2019
(51) Int. Cl.: C10L 5/40, C10L 5/46, C10L 5/36

(54) **PROCESS FOR PREPARING PELLETS FOR FIRING AN INDUSTRIAL FURNACE**
VERFAHREN ZUR HERSTELLUNG VON PELLETS ZUR BEFEUERUNG EINES INDUSTRIEOFENS
PROCÉDÉ POUR LA PRÉPARATION DE GRANULÉS DESTINÉS À CHAUFFER UN FOUR INDUSTRIEL

(30) Priority: 19.12.2018 NL 2022251; 21.10.2019 NL 2024064
(43) Date of publication of application: 27.10.2021
(73) Proprietor: Subcoal International B.V., 5854 PC Nieuw - Bergen (NL)
(72) Inventor: JENNISSEN, Lars, 5854 AM Nieuw Bergen (NL)
(74) Representative: Hoyng Rokh Monegier B.V.
(86) International application number: PCT/EP2019/085939
(87) International publication number: WO 2020/127473

(56) References cited:
- EP-A1- 1 083 212
- EP-A1- 2 090 641
- WO-A1-2008/106993
- WO-A1-2010/012510
- US-A1- 2010 116 181

## Description

### TECHNICAL FIELD

The invention relates to a process for preparing pellets from waste materials, pellets obtainable with said process and to a process for firing an industrial furnace.

### BACKGROUND ART

The process for firing an industrial furnace is a process used for example in the production of electricity. The furnaces for producing electricity are the most demanding and efficient furnaces currently in use. Other industrial furnaces that require high process stability are blast furnaces in steel production and cement- and lime kilns.

The furnace generally is supplied with powdery (pulverized) coal, oil or gas. The fuel generally is supplied through a number of burners, lances (or tuyeres). In case the furnace is used to produce electricity, the heat of the combustion is used to produce steam, which is used to drive turbines.

The amount of pulverized coal that can be injected depends on the coal and coke quality, furnace geometry, and operational practices. Furthermore, the pulverized coal has a low bulk density and bad storage characteristics. Coal therefore is pulverized just before use. A main disadvantage of pulverized coal is the fact that it is from a non-renewable source and therefore causing substantial CO2 emission.

Alternative fuels have been suggested, and to a certain extend also used, to reduce the burden of CO2 emission. Such alternative fuels need to allow its use in seamless processing. The alternative fuels should be transportable, before and after milling. Further, the alternative fuels need to allow injection in the flame where they need to show good burning characteristic (time to fully burn, burn virtually complete in the hot spot).

Alternative fuels suggested to be used for the high-end industrial furnaces are plastic pellets, mixed plastic/biomass pellets, wood pellets, sewage sludge pellets and the like.

One advantage of using plastic-only waste generally is that plastic waste has low thermal conductivity and high energy content. A disadvantage of using plastics-only waste is that such mixtures originating, for example, from domestic, urban or municipal waste are relatively valuable products that can be used to make (recycled) plastic products. A further disadvantage is, that despite a high calorific value, the waste plastic pellets are difficult to process in such a way that a suitable particle size distribution is obtained. Milling causes temperature increase, rubbery behavior of the plastics to such an extent that cryogenic milling is necessary. Cryogenic milling is however too expensive.

The delivery of alternative fuel into a furnace may vary depending upon the nature of the waste material and the type of furnace being supplied. There are several ways to directly use alternative fuel in furnace technologies. Such technologies include direct use by injection of powdered alternative fuel via or at the level of the lances, co-grinding of pellets with coal as described in WO2015/155193, or mixing coal and powdered alternative fuel before injecting the mixture into the furnace.

The alternative fuels that are used directly in a furnace have issues with processing, like dust formation, transport of powder and the like. Preferably, such fuels are made from selected waste fractions of domestic, urban or municipal waste. However, such waste fractions represent very heterogenic material from which the pellets are made. Yet, the industrial furnace requires relatively homogeneous materials to be able to be smoothly operated.

Therefore, these alternative fuels are used in practice only to partly replace fossil fuel in high end furnaces. Generally, in actual practice, the amount of alternative fuel is less than 30%, but in any case less than 50% relative to the powdered coal. The powdered coal is a relatively homogeneous material, and a substantial base load of coal attenuates fluctuations in the refuse derived pellet materials.

US2010/116181 describes pelletising plastic/cellulosic materials with a relatively low amount of plastic (less than 40 wt%), which, according to WO2008/107042 can be milled to particles largely below 2 mm that can be used as secondary fuel in combination with powdered coal. Secondary fuel with low amount of plastic has a relatively low combustion value, which is disadvantageous if such fuel would have to fully replace coal.

EP1083212A describes the preparation of pellets of plastic and cellulosic materials that can be used as secondary fuel in combination with powdered coal.

There is thus a need in the field for a process in which alternative fuel can be produced such that it is suitable to be supplied into an industrial furnace, particularly an industrial furnace for producing electricity, to even fully replace coal.

Furthermore, there is a need for a process in which alternative fuel can be produced with improved handling properties, such as reliable transport of the powder.

### SUMMARY OF THE INVENTION

The invention is defined in the appended claims.

The object of the present invention is to provide a process of making pellets comprising plastic and biomass (cellulosic fiber) that can be used to reliably replace fossil fuel completely in high end industrial furnaces used in modern equipment for producing electricity.

A further object is to provide a process to reliably run a high end industrial furnace with alternative fuel with improved handling properties.

In a first aspect, the invention relates to a method to produce pellets which are capable of providing free flowing powder suitable for firing an industrial furnace from municipal and/or other waste, the process comprising the following steps: (i) providing waste material comprising one or more thermoplastic material(s) of more than 40%, based on the total dry weight of the waste and one or more cellulosic material(s) of more than 30%, based on the total dry weight of the waste, wherein the waste has a particle size distribution with more than 80% larger than 5 mm and more than 95% smaller than 60 mm, (ii) subjecting the waste material through a pelletiser with holes between 4-16 mm, preferably 6-16 mm, and a length ratio of more than 2, and subjecting the pellets through a second pelletiser with holes between 4 and 10 mm, and a length ratio of more than 2 to provide pellets with a diameter between 4 and 10 mm, and a length of between 3 and 50 mm.

The pellets obtained with the process of the first aspect can be milled in a hammer mill such that a powder is obtained that shows good flow properties. Preferably, 25 and 70 wt% of the powder has a particle size between 2 and 3.15 mm.

These pellets unexpectedly allow to completely replace powdered coal in high-end industrial furnaces such as furnaces used in plants to produce electricity. The present invention therefore also relates to pellets having certain properties, obtained by twice pelletising.

In one embodiment of the invention, the pellets are obtainable by the process of the present invention, but preferably are obtained with a process comprising two pelletizing steps.

The pellets preferably have one or more of the following properties:
- a diameter between 4-10 mm diameter
- a Kahl hardness of between 8-40 kgf
- comprise substantially homogeneously molten plastic, obtained or obtainable by twice pelletising the waste material
- and/or a bulk density of 470 g/L or higher

More preferably, the pellets of the present invention have the following combination of properties:
- A diameter between 4-10 mm
- Comprising more than 40 wt% plastic material and more than 30 wt% cellulosic material relatively to the dry waste
- A bulk density of 470 g/L or higher, preferably about 500 g/L or higher, more preferably of 550 g/L or higher
- Comprising substantially homogeneously molten plastic, as can be analysed with milling the pellets in a hammer mill as defined hereafter, for obtaining ground material with a density of 220 g/L or more.

The pellets can be effectively ground in for example a hammer mill (such as a California pellet mill; 11.5x28) having a 6.4mm screen and a tip speed of 108 m/s. The resulting particles of the twice pelletised material has much better flow properties that particles that result from once pelletised material. Once pelletized material in such conditions require too high energy input to be effectively ground.

The twice pelletised pellets, when ground in a hammer mill, contain relatively low, and preferably virtually no pieces of plastic film or fibrous material. This is advantageous as this is important to achieve good flow properties Without being bound by such theory, it is thought that this improved milling behavior is caused by the molten plastic, that has further impregnated the fibrous materials.

In a further aspect of the invention, the process of firing an industrial furnace according the invention comprises the steps of: (i) providing pellets, which are prepared by or obtainable by (a) providing waste material comprising one or more thermoplastic material(s) of more than 40%, based on the total dry weight of the waste and one or more cellulosic material(s) of more than 30%, based on the total dry weight of the waste, wherein the waste has a particle size distribution with more than 80% larger than 5 mm, more than 95% smaller than 60 mm, (b) subjecting the waste material through a pelletiser with holes between 4-16 mm, preferably 6-16 mm, and a length ratio of more than 2, and (c) subjecting the pellets through a second pelletiser with holes between 4 and 10 mm, and a length ratio of more than 2, (ii) milling the pellets in a mill such that between 25 and 70 wt% has a particle size between 2 and 3.15 mm, and (iii) feeding the powdery fuel into the flame of the furnace, wherein the fuel is used in amount to provide more than 70% of the energy requirement of said furnace.

The powdery fuel according the invention preferably is used in an amount of about 90% or more of the energy requirement of said furnace, and even more preferably substantially al energy requirement is obtained by the powdery fuel according the invention.

In a further aspect of the invention, the invention relates to the use of pellets comprising one or more thermoplastic material(s) of more than 40%, based on the total dry weight of the pellets and one or more cellulosic material(s) of more than 30%, based on the total dry weight of the pellets, wherein the pellets are produced or producible by subjecting waste material comprising said plastic and cellulosic material through a pelletiser with holes between 4 - 16 mm, preferably 6-16 mm and a length ration of more than 2, and subjecting the pellets through a second pelletiser with holes between 4 and 10 mm, and a length ratio of more than 2, as fuel for an industrial furnace after being ground preferably such that between 25 and 70 wt% has a particle size between 2 and 3.15 mm.

The pellets obtained after the twice pelletizing process have advantageous properties over normal pellets, and it was unexpected that such further processing step led to pellets that can be used in one of the most demanding processes to even fully replace coal.

The twice pelletised pellets can be converted in powders with very good flowing and running properties by grinding in a standard equipment such as for example a hammer mill. Thereby, improved bulk, transport, and better dosing properties are achieved in comparison with once pelletised material.

The pellets have very high cold crushing strength resulting in negligible generation of fines in stock house and good resistance to disintegration during transport.

The pellets obtainable by the process of the present invention therefore possess a number of new properties, which can advantageously be used in firing industrial furnaces.

Further benefits and advantages of the present invention will become apparent in the detailed description with appropriate reference to the accompanying drawings.

### DETAILED DESCRIPTION

In a first aspect, the invention relates to a method to produce pellets which are capable of providing free flowing powder suitable for firing an industrial furnace from municipal and/or other waste, the process comprising the following steps: (i) providing waste material comprising one or more thermoplastic material(s) of more than 40%, based on the total dry weight of the waste and one or more cellulosic material(s) of more than 30%, based on the total dry weight of the waste, wherein the waste has a particle size distribution with more than 80% larger than 5 mm, more than 95% smaller than 60 mm, (ii) subjecting the waste material through a pelletiser with holes between 4-16 mm, preferably 6-16 mm and a length ration of more than 2, and subjecting the pellets through a second pelletiser with holes between 4 and 10 mm, and a length ratio of more than 2 to provide pellets with a diameter between 4 and 10 mm, and a length of between 3 and 50 mm.

The die of the pelletiser preferably is a cylindrical die, but flat dies are known, and can be used as well. Also, a first flat and second cylindrical die can be used, or first a cylindrical and secondly a flat die.

By the term "thermoplastic material" is meant thermoplastic polymers. The waste material used in the preparation of the pellets of the present invention comprises at least 40% thermoplastic material, preferably at least 45 weight % or at least 50 weight % thermoplastic material, like for example about 55 weight % or about 60 weight % thermoplastic material.

Generally, the amount of plastic material in the pellets is about 80% or less, preferably 70% or less. Hence, suitable ranges comprise 40-80 wt% of plastic, or most preferably 50-70 wt% of plastic.

Examples of thermoplastic polymers used herein are listed in US2010/0116181. Typically, the thermoplastic material or component may be a packing material or any type of plastic waste.

Preferably, at least 20 weight %, more preferably at least 40 weight %, even more preferably at least 50 weight %, and most preferably at least 60 weight % of the thermoplastic material are polyethylene homo- or copolymers.

The term "cellulosic material" used in the present invention relates to for example paper, carton, wood, cardboards, textiles such as cotton, rayon and/or viscose. The waste material used in the present invention comprises at least 30 weight % of cellulosic material, preferably more than 35 weight % or more of cellulosic material. Generally, the amount of cellulosic material is about 60 wt% or less, preferably about 50 wt% or less cellulosic material based on the total dry weight of the pellets. Suitable ranges include 30-60 wt% cellulosic material, preferably 30-50 wt% cellulosic material. Cellulosic material can also be denoted as biomass.

As used herein, the term "pellet" or "pellets" is used when referring to pellets of the present invention comprising one or more thermoplastic material(s) and one or more cellulosic material(s). The pellets are not limited by a degree of inhomogeneity. The pellets the present invention may be the commercially available Subcoal^{®} pellets that can be pelletised a second time.

Suitable processes to make pellets are described in the art, as for example in US6635093. It is however to be noted that the pellets should be pelletised twice in order to obtain pellets that are sufficiently homogeneous with respect to (molten) plastic and cellulosic material. Nevertheless, knowing the required final properties of the pellets of the invention, it may be possible to obtain such properties by using special dies or other processes.

Pellets have a uniform size range (diameter) generally within a range of 4 - 10 mm, preferably 6-10 mm. The length of the pellets generally will be between 3 and 50 mm, preferably 4-40 mm, and even more preferably between 5-30 mm.

The pellets can be produced by selecting waste plastic and biomass from refuse or paper recycling plants and the like. It is possible to use different selected waste streams in combination in order to achieve a required mix of plastic and cellulosic materials. The raw material preferably is shredded to a size of 5 cm or less for the largest dimension, preferably to a size of 4 cm or less. In a further embodiment, the raw material is shredded to a size of about 3.5 cm or less, preferably about 2.5 cm.

Preferably, the waste has a particle size distribution with more than 80% larger than 5 mm and more than 95% smaller than 60 mm. Preferably, more than 90% is smaller than 40 mm. In a further preferred embodiment, the waste has a particle size such that about 20 wt% or more has a size of more than 30 mm.

The material can be dried to a moisture content of about 2 - 15 wt%, preferably 5-15 wt%, and more preferably less than 10 wt%, and the material is pressed through a die with appropriate holes. Drying is preferably done after shredding.

The holes of the die can have a diameter of between about 4-20 mm, and an aspect ratio of between 2 and 20, preferably of at least 4. Preferred dimensions are a diameter between 4-16 mm more preferably 6-16 mm for the first pelletizing device, and between 6-10 mm for the second pelletizing device. The aspect ratio or length ratio (which phrases are used interchangeably) is at least 2. This, the thickness of the die (which defines the length of the path that the material travels through the die) is at least twice the diameter of the holes. The aspect ratio (length divided by diameter, or length ratio) preferably is about 4-15, and more preferably about 6-12.

The holes in the first and second pelletizing device may be the same or different, the holes being of the same diameter or larger in the first pelletizing device. In another embodiment, the holes in the first pelletizer are smaller than in the second pelletizer.

The two pelletizing steps allow effective melting of plastics that impregnate fibrous or film-like materials, which aids in improved grindability. During the first pelletizing step, the material generally is heated till below or around 100 °C, preferably between 70-90 °C, which allows shearing and grinding of the raw material. During the second pelletizing step, the temperature of the pellets preferably rises till about 100 °C or higher, preferably about 105 °C or higher, and may rise up to about 120 °C. The temperature during the second pelletizing step generally will be higher than in the first pelletizing step with about 5 °C or more, preferably about 10 °C or more like for example up to 20 or 30 °C. This relatively high temperature in the second pelletizing step allows further melting of the plastics. The improved molten and impregnated pellets show a substantial higher bulk density, and can relatively easily be distinguished from prior art pellets.

The heating value or calorific value or calorific heating value of any fuel is the energy released per unit mass or per unit volume of the fuel when the fuel is completely burnt. The quantity is determined by bringing all the products of combustion back to the original pre-combustion temperature, and in particular condensing any vapor produced. With other words, it is the amount of heat released during the complete combustion of a specified amount of it.

Calorimetry measures the higher heating value (HHV) and uses the following procedure. It fully combusts the sample using pure oxygen and then produces carbon dioxide and water. The water is initially produced as a vapor. However, once the entire sample is combusted (i.e., the test is complete) the water vapor condenses. This condensation process releases additional heat. Technically this additional heat is latent heat from the conversion of water from a vapor to a liquid phase. The combination of the heat released during the combustion of the sample and the subsequent heat released during the conversion of water vapor to liquid provides the maximum heat that can be obtained. This is known as Higher calorific value (HCV) or Higher heating value (HHV).

If the process maintains the water produced in the vapor state, then the latent heat is not recovered. This is known as the Lower calorific value (LCV) or Lower heating value (LHV). The LHV is only the heat of combustion and does not include the heat released during condensation of the water vapor. LHV is the key measurement for most combustion systems that convert heat to power or energy.

The HHV and LHV are valid for complete combustion of the fuel to CO₂ and H₂O.

The calorific value (LCV) of the pellets is generally about 19-28 GJ/ton, which is lower than full plastic material, which generally has a calorific value of 31-35 GJ/ton (on dry weight).

Preferably, halogen elements like chlorine are present in the pellets in an amount below 1 wt%, more preferably below 0.3 wt%. High input of this elements may lead to corrosion in the dry and/or wet gas cleaning system and in addition to chlorine emission with the drain water of the top gas scrubber.

The oxygen content of the pellets is preferably in the range of 20 to 30 w% of the dry weight pellets.

The hydrogen content of the pellets is preferably in the range of 6 to 8 w% of the dry weight pellets.

Preferably, the pellets may comprise 1 to 10 weight % of moisture, more preferably about 5 wt% or less. The amount of moisture may be below 2 or below 1 %.

Preferably, the strength of the pellets is about 8 kgf or more, more preferably about 10 kgf or more. Generally, the strength is about 40 kgf or less, often about 25 kgf or less. It is however possible to have even harder pellets, for example having a strength of up to 70 kgf or less, for example 60 kgf or less. It may be preferably to have a strength of about 30 kgf or less.

The hardness can be measured with a Kahl pellet hardness tester, available from Amandus Kahl GmbH&Co KG, Hamburg. A sufficient strength has the advantage that the pellets have a relatively high density, which allows efficient transport, and the strength precludes the formation of large amounts of fines during the transport. The Kahl pellet hardness tester is one of the standard test methods in the industry.

The pellets obtained or obtainable with the process of the present invention can be milled in a hammer mill such that the powder shows good flow properties, and such that preferably 25-70 wt% of the powder has a particle size between 2 and 3.15 mm.

These pellets unexpectedly allow to even fully replace powdered coal in high end industrial furnaces. The pellets preferably have one or more of certain properties, obtained by twice pelletising.

Preferred properties comprise one or more of the following:
- a diameter between 4-10 mm diameter
- a Kahl hardness of between 8-40 kgf
- a substantially homogeneously molten plastic, obtained by twice pelletising the waste material
- a bulk density of 470 g/L or higher

The pellets can be ground in a hammer mill (like for example a California pellet mill; 11.5x28 having a 6.4mm screen and a tip speed of 108 m/s). The resulting particles have preferably a bulk density (tapped) of 220 g/L or higher

The pellets, when ground in a hammer mill, contain virtually no pieces of plastic film or fibrous strands, as these would be detrimental for flow properties

The pellets are ground to relatively small particles of below 3.15 mm. Generally, the weight percentage of particles larger than 3.15 mm is about 15 wt% or less, preferably about 10 wt% or less and even more preferably about 7.5 wt% or less. More preferably, more than 95 wt%, more preferably more than 98 wt% of the ground material is smaller than 3.15 mm. Yet, the particles are not dusty. Preferably, more than 25 wt% is larger than 2 mm, and more preferably more than 30wt% is larger than 2 mm. In addition, preferably about 75 wt% or more is larger than 1 mm.

In one embodiment, preferably, the ground material comprises about 30 wt% of material with a size between 2 and 3.15 mm, and even more preferred about 40 wt% or more.

The (tapped) bulk density is measured as follows: an amount of pellets is poured in a 100 mL cylinder (diameter 2.5 cm), and measuring the amount of pellets present in gram. Tapping is done by placing the beaker on a vibrating surface (0.5 mm vertical vibration; 240 times per minute) for 5 min; and measuring the volume of pellets. The tapped density is the amount in gram amount divided by the volume measured.

The pellets which are obtained or obtainable by twice pelletising have a higher bulk density. Pellets obtained by pelletizing once generally have a bulk density below 460 g/L. The pellets according to the present invention generally have a bulk density of 470 g/L or higher, preferably 480 g/L or higher. Generally, the density is 700 g/L or lower. The bulk density of the pellets more preferably is about 500 g/L or higher, and even more preferred, about 550 g/L or more.

The grinding is tested in a hammer mill (California pellet mill; 11.5x28) having a 6.4mm screen and a tip speed of 108 m/s, used according the manufacturers description.

The bulk density (tapped) of the ground pellets (the particulate material) generally is 220 g/L or higher, preferably 230 g/L or higher. This is contrasted with standard pelletized material of the prior art, which generally has a bulk density after milling often is below 200 g/L.

Preferably, the average particle size of the ground particles is less than 2.5 mm, and preferably larger than 1 mm.

The grinding in an industrial setting generally takes place in a suitable mill, such as a hammer mill, jet mill or the like. Preferably, a hammer mill is used.

It appears that if singly pelletised pellets are ground to a particle size smaller than 3 mm in such apparatus, a material is obtained with particles and a significant amount of small plastic fluffy material (plastic film parts and fibrous material). This fluffy material strongly influences flow and handling properties negatively. Thereby, both transport and feeding of the particles into a furnace is hampered. Also burning is less stable. Virtually no fluffy material is observed if grinding is performed on the pellets according to the present invention.

The process of firing an industrial furnace according the invention comprises the steps of: (i) providing pellets, as described above, (ii) milling the pellets in a mill, preferably such that between 25 and 70 wt% has a particle size between 2 and 3.15 mm, and (iii) feeding the powdery fuel into the flame of the furnace, wherein the fuel is used in amount to provide more than 70% of the energy requirement of said furnace.

Preferably, the fuel is used in amount to provide more than 80%, and more preferably more than 90% of the energy requirement of said furnace.

In an even more preferred embodiment, said pellets are provided as a complete replacement of fossil fuel in the production of electricity.

In a further aspect of the invention, the invention relates to the use of pellets as described above, as fuel for an industrial furnace after being ground, preferably such that between 25 and 70 wt% of the particles have a size between 2 and 3.15 mm.

The particles are blown into the raceway of an industrial furnace at an adiabatic flame temperature in the range of about 1200 °C to about 2500 °C and air volume in the range of 1280-2000 Nm³/kg*1000. The temperature is generally dependent on the type of industrial furnace.

Hereinafter, the present invention is described in more detailed and specifically with reference to the examples, which however are not intended to limit the present invention.

### EXAMPLES

### Examples 1-2 and comparative experiment A

A series of tests have been conducted with RDF comprising about 45% plastic, about 40% biomass, about 5% other materials and about 10% moisture.

First and second (if applicable) pelletizing was done through a die having 6 mm holes and a length of 70 mm (aspect ratio 11.7). The die speed was about 200 rpm.

The pellets obtained after the first pelletizing step had a bulk density of 460 g/L, while the twice pelletised pellets had a bulk density of 508 g/L. The following tests have been done:

Grinding and compare single pelleted Ø6mm pellets:
- With a Hammer mill screen with a Ø6,4mm holes screen at a speed of 96Hz. Because at this speed difficulties arose (as can be concluded from the high energy consumption), it was not useful to also test at lower tip speed.

Grinding and compare double pelleted Ø6mm pellets:
- With a Hammer mill screen with a Ø6,4mm holes screen at a speed of 48Hz
- With a Hammer mill screen with a Ø6,4mm holes screen at a speed of 96Hz

Screen, power consumption and speed are given in the table below, together with the bulk density.

| Experiment | Pelletized | Screen in mill | Tip speed | Power consumption | Bulk density of product |
|---|---|---|---|---|---|
| A | Once | 6.4 mm | 108 m/s | 23.6 kW | 203 g/L |
| 1 | Twice | 6.4 mm | 54 m/s | 6.3 kW | 286 g/L |
| 2 | Twice | 6,4 mm | 108 m/s | 16.9 kW | 233 g/L |

The products of examples 1 and 2 have been analysed for particle size distribution according to the methods DIN 18123: 2011-04 and DIN-EN 15149-1&-2: 2011-01. Sieve fractionating over 0.5 mm, 1 mm, 2 mm, 3.15 mm and >3.15 mm yielded the following results:

| Experiment / Size distribution (wt%) | 1 | 2-1 | 2-2 | 2-3 |
|---|---|---|---|---|
| Fraction < 0.5 mm | 2.7 | 9.8 | 6.7 | 12.0 |
| Fraction 0.5 - 1 mm | 10.5 | 20.1 | 17.1 | 24.7 |
| Fraction 1-2 mm | 29.7 | 33.9 | 33.7 | 32.4 |
| Fraction 2-3.15 mm | 57.1 | 36.2 | 42.5 | 30.9 |
| Fraction > 3.15 mm | 0 | 0 | 0 | 0 |

From these results it appears that grinding double pelleted pellets on a Hammer mill with a screen with Ø6,4mm holes compared to grinding single pelleted pellets (compare experiment A with 2) shows that the energy consumption decreased per amount of pellets (kg). Furthermore, particles instead of fluff were produced, increasing the bulk density from about 200 to 230 (15% increase). Because of the lower energy consumption, a higher capacity is possible when grinding double pelleted pellets

### Example 3

From selected solid refuse with an energy content of 23 GJ/ton, reduced in size below 50 mm, pellets were prepared by twice pelletising over a die with holes of 6 mm diameter, and an aspect ratio of about 11.

The pellets showed a density of 625 g/L, and were substantially darker than the pellets obtained after the first pelletizing step, showing a more homogeneous texture.

Milling was performed with a California hammer mill with a tip speed of 108 m/s and a 6.4 mm screen. Results are shown in the next table. Furthermore, ground material was sieved over a 3 mm screen sieve with hand shaking. This allowed fluff to stay on the screen. The amount of fluff was very low.

| Experiment / Size distribution (wt%) | 3-1 | 3-2 |
|---|---|---|
| Fraction < 0.5 mm | 5.7 | 12.5 |
| Fraction 0.5 - 1 mm | 9.3 | 11.9 |
| Fraction 1-2 mm | 23.3 | 21.1 |
| Fraction 2-3.15 mm | 52.8 | 48.7 |
| Fraction > 3.15 mm | 8.9 | 5.8 |

## Claims

1. Method for producing pellets which are capable of providing free flowing powder suitable for firing an industrial furnace from municipal and/or other waste, the process comprising the following steps: (i) providing waste material comprising one or more thermoplastic material(s) of more than 40%, based on the total dry weight of the waste and one or more cellulosic material(s) of more than 30%, based on the total dry weight of the waste, wherein the waste has a particle size distribution with more than 80% larger than 5 mm, more than 95% smaller than 60 mm, (ii) subjecting the waste material through a pelletiser with holes between 4-16 mm and a length ratio of more than 2, and subjecting the pellets through a second pelletiser with holes between 4 and 10 mm, and a length ratio of more than 2 to provide pellets with a diameter between 4 and 10 mm, and a length of between 3 and 50 mm.

2. Pellets formed from waste material comprising one or more plastic material(s) of more than 40%, based on the total dry weight of the waste and one or more cellulosic material(s) of more than 30%, based on the total dry weight of the waste, the pellets having the following properties:
a. a diameter between 4-10 mm diameter
b. comprising substantially homogeneously molten plastic, obtained or obtainable by twice pelletising the waste material,
c. wherein the pellets have a bulk density of 470 g/L or higher; and
d. preferably, when ground in a hammer mill to form a powder, between 25 and 70 wt% of the powder has a particle size between 2 and 3.15 mm.

3. Method or pellets according to any one of claims 1-2, wherein the pellets have a Kahl hardness of between 8-40 kgf, measured with a Kahl pellet hardness tester.

4. Method or pellets according to any one of claims 1-3, wherein the pellets have a bulk density of 470 g/L or higher

5. Method or pellets according to any one of claims 1-4, wherein the pellets are ground in a hammer mill to form a powder, said powder having a bulk density of 220 g/L or higher

6. Method or pellets according to any one of claims 1-5, wherein the calorific value (LCV) of the pellets is about 19-28 GJ/ton

7. Method or pellets according to any one of claims 1-6, wherein the hydrogen content of the pellets is in the range of 7 to 8 w% of the dry weight pellets.

8. Method or pellets according to any one of claims 1-7, wherein the oxygen content of the pellets is in the range of 20 to 30 w% of the dry weight pellets

9. Method or pellets according to any one of claims 1-8, wherein the pellets comprise:
- one or more thermoplastic material(s) in an amount of 40-70 weight %, based on the total dry weight of the pellets; and
- one or more cellulosic material(s) of more than 30-50 weight %, based on the total dry weight of the pellets.

10. Method or pellets according to any one of claims 1-9, wherein the pellets have a diameter of between 6 and 10 mm and a length of between 4 and 40 mm.

11. Use of pellets according to any one of claims 2-10, as fuel for an industrial furnace after being ground to particles preferably such that between 25 and 70 wt% has a particle size between 2 and 3.15 mm.

12. Process of firing an industrial furnace comprising the steps of:
providing pellets according to any one of claims 2-10;
grinding the pellets in a mill, preferably to achieve a particle size such that between 25 and 70 wt% has a particle size between 2 and 3.15 mm;
feeding the powdery fuel into the flame of the furnace,
wherein the fuel is used in amount to provide more than 70% of the energy requirement of said furnace, preferably more than 90% of the energy requirement of said furnace.

13. Use or process according to any one of claims 11-12 wherein the industrial furnace is used in a process to produce electricity

14. Use or process according to any one of claims 11-13 wherein the pellets are ground in a hammer mill.

## Patentansprüche

1. Verfahren zur Herstellung von Pellets, die in der Lage sind, ein freifließendes Pulver bereitzustellen, das zur Befeuerung eines Industrieofens mit Haushalts- und/oder anderen Abfällen geeignet ist, wobei der Prozess die folgenden Schritte umfasst: (i) Bereitstellen von Abfallmaterial, das basierend auf dem Gesamttrockengewicht des Abfalls zu mehr als 40 % ein oder mehrere thermoplastische Materialien und basierend auf dem Gesamttrockengewicht des Abfalls zu mehr als 30 % ein oder mehrere Zellstoffmaterialien umfasst, wobei der Abfall eine Partikelgrößenverteilung aufweist, bei der mehr als 80 % größer als 5 mm und mehr als 95 % kleiner als 60 mm sind, (ii) Geben des Abfallmaterials durch eine Pelletiervorrichtung mit Löchern zwischen 4 und 16 mm und einem Längenverhältnis von mehr als 2, und Geben der Pellets durch eine zweite Pelletiervorrichtung mit Löchern zwischen 4 und 10 mm und einem Längenverhältnis von mehr als 2, um Pellets mit einem Durchmesser zwischen 4 und 10 mm und einer Länge zwischen 3 und 50 mm bereitzustellen.

2. Pellets, die aus Abfallmaterial gebildet werden, das basierend auf dem Gesamttrockengewicht des Abfalls zu mehr als 40 % ein oder mehrere Kunststoffmaterialien und basierend auf dem Gesamttrockengewicht des Abfalls zu mehr als 30 % ein oder mehrere Zellstoffmaterialien umfasst, wobei die Pellets die folgenden Eigenschaften aufweisen:
a) einen Durchmesser zwischen Durchmessern von 4 bis 10 mm,
b) umfassend im Wesentlichen homogen geschmolzenen Kunststoff, der durch zweifaches Pelletisieren des Abfallmaterials erzielt wird oder erzielt werden kann,
c) wobei die Pellets eine Fülldichte von 470 g/L oder mehr aufweisen; und
d) bevorzugt, wenn sie in einer Hammermühle zermahlen werden, um ein Pulver zu bilden, zwischen 25 und 70 Gewichtsprozent des Pulvers eine Partikelgröße zwischen 2 und 3,15 mm aufweisen.

3. Verfahren oder Pellets nach einem der Ansprüche 1 bis 2, wobei die Pellets eine Kahl-Härte zwischen 8 und 40 kgf aufweisen, die mit einem Kahl-Pellethärteprüfgerät gemessen wird.

4. Verfahren oder Pellets nach einem der Ansprüche 1 bis 3, wobei die Pellets eine Fülldichte von 470 g/L oder mehr aufweisen.

5. Verfahren oder Pellets nach einem der Ansprüche 1 bis 4, wobei die Pellets in einer Hammermühle zermahlen werden, um ein Pulver zu bilden, wobei das Pulver eine Fülldichte von 220 g/L oder mehr aufweist.

6. Verfahren oder Pellets nach einem der Ansprüche 1 bis 5, wobei der Heizwert (LCV) der Pellets ungefähr 19 bis 28 GJ/Tonne beträgt.

7. Verfahren oder Pellets nach einem der Ansprüche 1 bis 6, wobei der Wasserstoffgehalt der Pellets in dem Bereich von 7 bis 8 Gewichtsprozent der Trockengewichtpellets liegt.

8. Verfahren oder Pellets nach einem der Ansprüche 1 bis 7, wobei der Sauerstoffgehalt der Pellets in dem Bereich von 20 bis 30 Gewichtsprozent der Trockengewichtpellets liegt.

9. Verfahren oder Pellets nach einem der Ansprüche 1 bis 8, wobei die Pellets umfassen:
ein oder mehrere thermoplastische Materialien in einer Menge von 40 bis 70 Gewichtsprozent basierend auf dem Gesamttrockengewicht der Pellets; und
ein oder mehrere Zellstoffmaterialien von mehr als 30 bis 50 Gewichtsprozent basierend auf dem Trockengewicht der Pellets.

10. Verfahren oder Pellets nach einem der Ansprüche 1 bis 9, wobei die Pellets einen Durchmesser zwischen 6 und 10 mm und eine Länge zwischen 4 und 40 mm aufweisen.

11. Verwendung der Pellets nach einem der Ansprüche 2 bis 10 als Brennstoff für einen Industrieofen, nachdem sie zu Partikeln zermahlen wurden, bevorzugt so dass zwischen 25 und 70 Gewichtsprozent eine Partikelgröße zwischen 2 und 3,15 mm aufweisen.

12. Prozess zum Heizen eines Industrieofens, umfassend folgende Schritte:
Bereitstellen der Pellets nach einem der Ansprüche 2 bis 10;
Zermahlen der Pellets in einer Mühle, bevorzugt um eine Partikelgröße zu erreichen, so dass zwischen 25 und 70 Gewichtsprozent eine Partikelgröße zwischen 2 und 3,15 mm aufweisen;
Einspeisen des pulverförmigen Brennstoffs in die Flamme des Ofens;
wobei der Brennstoff in einer Menge verwendet wird, um mehr als 70 % des Energiebedarfs des Ofens, bevorzugt mehr als 90 % des Energiebedarfs des Ofens, bereitzustellen.

13. Verwendung oder Prozess nach einem der Ansprüche 11 bis 12, wobei der Industrieofen bei einem Prozess zur Stromerzeugung verwendet wird.

14. Verwendung oder Prozess nach einem der Ansprüche 11 bis 13, wobei die Pellets in einer Hammermühle zermahlen werden.

## Revendications

1. Procédé permettant de produire des granulés pouvant fournir une poudre à écoulement libre appropriée pour chauffer un four industriel à partir de déchets ménagers et/ou d'autres déchets, le processus comprenant les étapes suivantes consistant à : (i) fournir des matières résiduelles comprenant une ou plusieurs matières thermoplastiques à hauteur de plus de 40 %, sur la base du poids sec total des déchets, et une ou plusieurs matières cellulosiques à hauteur de plus de 30 %, sur la base du poids sec total des déchets, dans lequel les déchets présentent une distribution de tailles de particule dont plus de 80 % supérieurs à 5 mm et plus de 95 % inférieurs à 60 mm, (ii) soumettre les matières résiduelles à un granulateur doté de trous compris entre 4 à 16 mm et d'un rapport de longueur de plus de 2, et soumettre les granulés à un deuxième granulateur doté de trous compris entre 4 et 10 mm et d'un rapport de longueur de plus de 2 pour fournir des granulés d'un diamètre compris entre 4 et 10 mm et d'une longueur comprise entre 3 et 50 mm.

2. Granulés formés à partir de matières résiduelles comprenant une ou plusieurs matières plastiques à hauteur de plus de 40 %, sur la base du poids sec total des déchets, et une ou plusieurs matières cellulosiques à hauteur de plus de 30 %, sur la base du poids sec total des déchets, les granulés présentant les propriétés suivantes :
a) un diamètre compris entre des diamètres de 4 à 10 mm,
b) comprenant substantiellement du plastique fondu de manière homogène, obtenu ou pouvant être obtenu par une double pelletisation des matières résiduelles,
c) dans lequel les granulés présentent une masse volumique de 470 g/L ou supérieure ; et
d) de préférence, lorsqu'ils sont broyés dans un broyeur à marteau pour former une poudre, entre 25 et 70 pour cent en poids de la poudre présentent une taille de particule comprise entre 2 et 3,15 mm.

3. Procédé ou granulés selon l'une quelconque des revendications 1 à 2, dans lequel/lesquels les granulés présentent une dureté Kahl comprise entre 8 et 40 kgf, mesurée à l'aide d'un contrôleur de dureté de granulés Kahl.

4. Procédé ou granulés selon l'une quelconque des revendications 1 à 3, dans lequel/lesquels les granulés présentent une masse volumique de 470 g/L ou supérieure.

5. Procédé ou granulés selon l'une quelconque des revendications 1 à 4, dans lequel/lesquels les granulés sont broyés dans un broyeur à marteau pour former une poudre, ladite poudre présentant une masse volumique de 220 g/L ou supérieure.

6. Procédé ou granulés selon l'une quelconque des revendications 1 à 5, dans lequel/lesquels le pouvoir calorifique (LCV) des granulés s'élève à environ 19 à 28 GJ/tonne.

7. Procédé ou granulés selon l'une quelconque des revendications 1 à 6, dans lequel/lesquels la teneur en hydrogène des granulés est comprise dans la plage de 7 à 8 pour cent en poids des granulés en poids sec.

8. Procédé ou granulés selon l'une quelconque des revendications 1 à 7, dans lequel/lesquels la teneur en oxygène des granulés est comprise dans la plage de 20 à 30 pour cent en poids des granulés en poids sec.

9. Procédé ou granulés selon l'une quelconque des revendications 1 à 8, dans lequel/lesquels les granulés comprennent :
une ou plusieurs matières thermoplastiques à hauteur d'une quantité de 40 à 70 pour cent en poids, sur la base du poids sec total des granulés; et
une ou plusieurs matières cellulosiques à hauteur de plus de 30 à 50 pour cent en poids, sur la base du poids sec des granulés.

10. Procédé ou granulés selon l'une quelconque des revendications 1 à 9, dans lequel/lesquels les granulés présentent un diamètre compris entre 6 et 10 mm et une longueur comprise entre 4 et 40 mm.

11. Utilisation de granulés selon l'une quelconque des revendications 2 à 10 comme combustible pour un four industriel après avoir été broyés en particules de préférence de telle sorte qu'entre 25 et 70 pour cent en poids présentent une taille de particule comprise entre 2 et 3,15 mm.

12. Processus de chauffage d'un four industriel comprenant les étapes consistant à :
fournir des granulés selon l'une quelconque des revendications 2 à 10 ;
broyer les granulés dans un broyeur, de préférence pour atteindre une taille de particule telle qu'entre 25 et 70 pour cent en poids présentent une taille de particule comprise entre 2 et 3,15 mm;
alimenter le combustible poudreux dans la flamme du four ;
dans lequel le combustible est utilisé à hauteur d'une quantité pour fournir plus de 70 % des besoins en énergie dudit four, de préférence plus de 90 % des besoins en énergie dudit four.

13. Utilisation ou processus selon l'une quelconque des revendications 11 à 12, dans laquelle/lequel le four industriel est utilisé dans un processus permettant de produire de l'électricité.

14. Utilisation ou processus selon l'une quelconque des revendications 11 à 13, dans laquelle/lequel les granulés sont broyés dans un broyeur à marteau.
